# EUROPEAN PATENT SPECIFICATION

(11) **EP 2 551 509 B1**
(45) Date of publication and mention of the grant of the patent: **11.04.2018**
(21) Application number: 12173994.0
(22) Date of filing: 28.06.2012
(51) Int. Cl.: F02M 35/12, F02M 35/024, B01D 46/00, B01D 39/16, B01D 46/42, B01D 46/10, F02M 35/14

(54) **Air filter element with noise reduction**
Luftfilterelement mit Rauschverminderung
Élément de filtre à air à réduction de bruit

(30) Priority: 28.07.2011 GB 201112963
(43) Date of publication of application: 30.01.2013
(73) Proprietor: Nissan Motor Manufacturing (UK) Ltd., Cranfield Bedfordshire MK43 0DB (GB)
(72) Inventor: Delgado Deza, Victor Manuel, Barcelona 08040 (ES)

(56) References cited:
- FR-A1- 2 931 516
- JP-A- 8 152 890
- JP-A- 62 255 565
- JP-A- 2003 035 221
- JP-A- 2007 177 706

## Description

### Field of the Invention

The present invention relates to an air filter element, in particular to a filter element for use with an internal combustion engine. The invention also relates to a method of manufacturing an air filter element.

### Background of the Invention

Air filters are used in many machines today and are employed in many locations in a modern motor vehicle. In general, they are intended to reduce or prevent the ingestion of fine dust and dirt particles in the air used by the vehicle. The intake air is typically used, for example, for cooling, or to support combustion within an internal combustion engine. Since air filters frequently become blocked over time with the dust and dirt contaminating the air, they are generally arranged so as to be readily accessible within the vehicle and cost effective to maintain or replace. Dust and dirt particles blocking the air filter can reduce the flow of air through the filter and detrimentally affect the performance of the machine in question.

The induction of air into a machine often generates unwanted noise. Where the air is drawn into the intake system in regular pulses, as is the case with intake systems for reciprocating-piston type internal combustion engines, the induction of air is a significant source of audible noise. Tuning the relative dimensions of the inlet duct and outlet ducts, and/or the air box may reduce the magnitude and/or frequency of this noise. Alternatively, or in addition, countermeasures such as Helmholtz resonators may be employed to manage the audible volume of the induction noise in a particular frequency band.

Other known countermeasures for reducing such noise include installing the air filter in lengthy ducting that is arranged to draw air into the machine as far away as possible from human operators or bystanders.

Known solutions are disclosed in JP2007/177706 and JP2003/0352221 which have air filters with noise reduction elements.
The drawbacks associated with such solutions include compromising packaging space and, potentially, induction efficiency. Such solutions as outlined above may also add significant cost and complexity to the machine.

Accordingly, it is an aim of the present invention to address the above issues and to provide an air filter element that improves the overall performance of an air filter system, and can attenuate induction noise whilst maintaining air filtration performance. Such embodiments thereby address the issue of abating the sound levels associated with the induction of air into the machine whilst maintaining air filtration performance, and keeping parts complexity and assembly time to a minimum. In addition, the present invention offers a reduction in component size and weight when compared to known systems.

### Summary of the Invention

According to the present invention there is provided an apparatus and method as claimed in the independent and dependent claims.

Advantageously, the filter element of the present invention is arranged in use to filter the airflow through the air filter element while attenuating the sound pressure level generated by the flowing air, thereby mitigating acoustic reflection.

Advantageously, both regions of the filter element may be arranged to be permeable to air, maximising the surface area available for air filtration and increasing service life. The provision of a dedicated portion of the filter element for managing sound levels allows it to be readily tuned for a specific application. The filter element may be fitted to a range of machines arranged to operate in different environments or which run at different operating speeds, and the relative proportions of the first and second regions may be optimised as desired. The relative proportions of the two regions may be optimised for both air filtration and the management of sound levels over a variety of bandwidths without increasing assembly time, packaging space, or significantly affecting the cost.

The present invention offers the further advantage that the filter element is a unitary device, keeping parts complexity and assembly time to a minimum. This also allows easy access to fit and remove the air filter element. The air filter element has an upstream surface and a downstream surface, wherein at least one of the upstream surface and/or downstream surface bounding a first region is provided with surface formations arranged to reduce or substantially eliminate reflection of sound waves from the upstream and/or downstream surfaces of the first region. The filter element may have at least one of the upstream and/or downstream surfaces of the first region arranged so as not to be perpendicular with the flow axis of the air passing through the filter element. The surface formations may take the form of a plurality of raised triangular section elements alternately orientated at right angles to each other to reduce the surface area of any pair of parallel surfaces formed thereby.
Advantageously, at least one of the upstream and/or downstream surfaces of the first region is arranged so as not to be perpendicular with the flow axis of the air passing through the filter element. This greatly reduces acoustic reflections, further improving noise-reduction performance. Advantageously, such formations may serve to further reduce acoustic reflections off the surface of the air filter element in use, further improving noise reduction performance. Additionally, such formations may serve to increase surface area of the filter element, increasing air filtration area whilst keeping packaging space to a minimum.
Embodiments of the present invention may improve the performance of an existing air intake and may be employed to manage a variety of air filtration and/or noise reduction requirements of a variety of different equipment without increasing assembly time or parts complexity. Embodiments of the invention are suitable for use with a variety of machines of different size or output without significant compromise in either air filtration or noise reduction performance.

### Brief Description of the Drawings

The present invention will now be described, by way of example only, with reference to the accompanying drawings in which:
Figure 1 shows a section through a known air intake system for an internal combustion engine;
Figure 2 shows a perspective view of an example of a filter element apparatus embodying one form of the present invention; and
Figure 3 shows a cross-section view along A-A of the filter element shown in Figure 2.

While the examples given for suitable applications for the present invention relate to air filters for vehicles, it will be appreciated by one skilled in the art that there are potentially other uses for the present invention with non-vehicular applications, such as generator sets, compressors, air-conditioners and other air handling equipment.

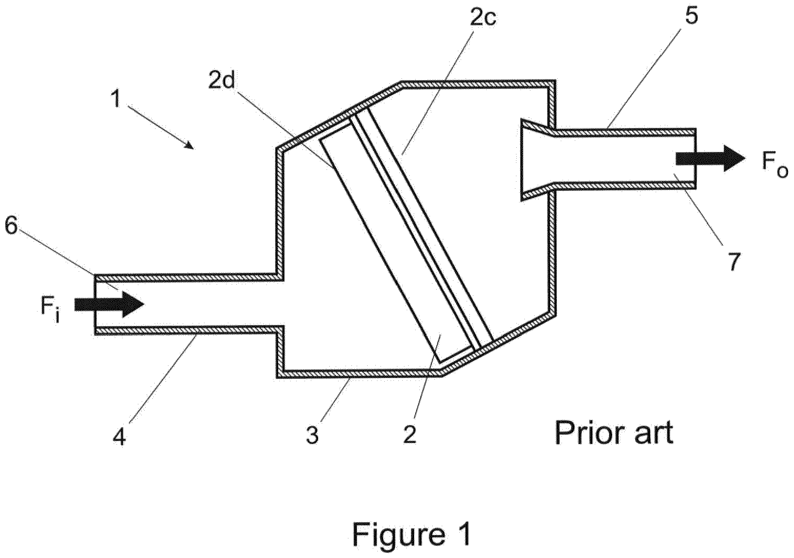

Figure 1 illustrates an example of a known air intake system shown generally at 1. The example shown is typical of an air intake system 1 for an internal combustion engine of a motor vehicle (not shown). The air intake system 1 comprises a filter element 2, disposed within an air box 3 which supports the filter element 2 around at least a portion of its periphery. The air box 3 is provided with an intake duct 4 and an outlet duct 5, arranged to be in fluid communication with an induction system of an engine (not shown). In use, air is drawn from within an engine bay (not shown), or from outside of the vehicle, via the intake duct 4 which is provided with an opening or inlet 6 through which air may pass. When the engine is running, a low-pressure zone is generated in the induction system, drawing air through the intake system 1 and into the induction system.

During operation, air from outside of the intake system 1 is drawn into the inlet 6 and is guided by the intake duct 4 into the air box 3. The size and shape of the intake system 1 are arranged so as to minimise the restriction of air flow from the inlet 6 to an outlet 7 that terminates the outlet duct 5. In order to minimise the restriction of airflow caused by the air passing through the filter element 2, the filter element 2 is made as large as possible to maximise surface area. It may be seen from Figure 1 that the filter element 2 has been placed substantially diagonally within the air box 3 and that the air box 3 has a significantly larger cross-sectional area than either the inlet duct 4 or outlet duct 5. The size, shape and orientation of the filter element 2 and the volume of the air box 3 are critical to optimise airflow and thus the performance of the engine.

Airflow through the intake system 1 is represented in Figure 1 by two arrows, Fᵢ representing airflow into the inlet 6 and Fₒ representing airflow from the outlet towards the induction system of the engine.

Air borne contaminants such as dust, dirt or sand should be prevented from entering the induction system of the engine and thus the air must be reliably filtered before it passes to the engine. The filter element 2 is an air-permeable membrane, arranged to filter out such contaminants whilst permitting free flow of air to the induction system. The filter element 2 comprises two main surfaces, an upstream or "dirty" side surface 2d and a downstream or "clean" side surface 2c. Any air occupying the volume between the inlet 6 and the filter element 2 is treated as if it were contaminated or 'dirty', whilst any air between the filter element 2 and the outlet 7 is considered clean. The intake of air in internal combustion engines can be a considerable source of noise.

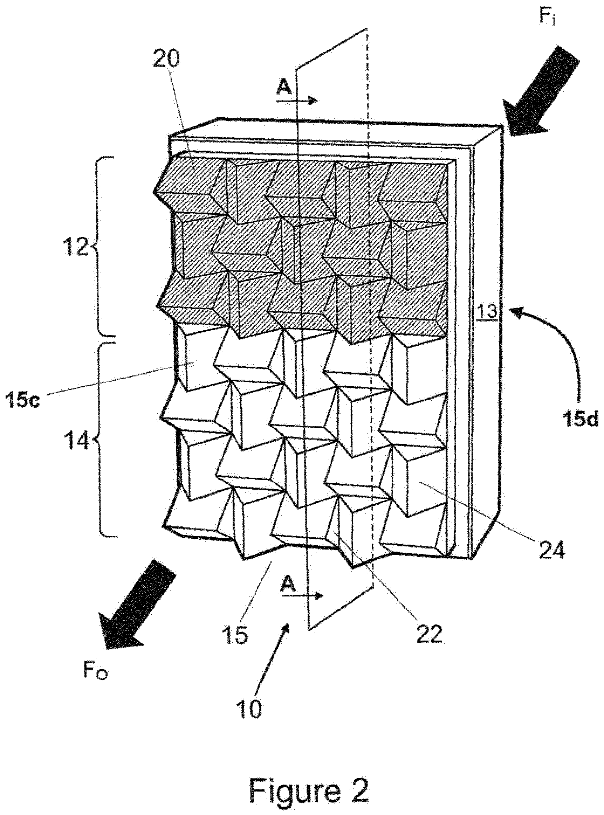

Figure 2 shows a perspective view of an example of an air filter according to an embodiment of the invention. The air filter element 10 is used as a direct replacement for the filter element 2 shown in Figure 1. The filter element 10 comprises a first air permeable region 12 and a second air permeable region 14.

The first air permeable region 12 is primarily arranged to absorb sound and attenuate acoustic reflections. The second air permeable region 14, on the other hand, is primarily arranged to filter dust and other particles from the air. It may be seen clearly from Figure 2 that the first and second air permeable regions 12, 14 are arranged so as to be substantially contiguous, forming a generally continuous wall indicated at 15.

The filter element 10 of the present invention is formed from a suitable air permeable material, such as an open-cell foam (e.g. polyurethane), or alternatively from a non-woven fabric, such as polyethylene terephthalate (polyester or PET). In the example shown in Figure 2, the first air permeable region 12 and second air permeable region 14 are formed from a single piece of material or by a single foaming operation to form a unitary structure.

The first and second regions 12, 14 may be formed by co-moulding or otherwise introducing together two materials of dissimilar densities or other physical properties into the same tool to form a unitary wall 15.

The wall 15 is bordered by edge 13 which forms a frame that has a greater rigidity than the material of either the first or second regions 12, 14 and thereby provides means for reliably mounting the filter element 10 within the air box 3. Alternatively, the edge 13 may be formed by a border of increased density but formed from the same material as the first and second regions 12, 14. Such a border may be formed by folding over the edges of the first and second regions 12, 14, or alternatively by locally increasing the density of the material during manufacture as may be appropriate. If necessary, the edge 13 may be provided by a separate component bonded to the first and second regions as required. This border or edge 13 may cooperate with, or otherwise engage, locating features formed in the inner surfaces of the air box 3.

The filter element 10 comprises two main surfaces, a downstream or clean side surface 15c, and an upstream or dirty side surface 15d. The clean side surface 15c comprises a plurality of integrally formed surface formations 20 arranged to increase the surface area of the filter element 10 and to attenuate acoustic reflections. The surface formations 20 take the form of a plurality of raised triangular section elements or wedges alternately orientated at right angles to each other to reduce the surface area of any pair of parallel surfaces formed thereby, in a manner similar to those found in an anechoic chamber.

The noise cancellation surfaces are faced towards the source of noise, oriented in order that sound waves fall on them. In this case noise cancellation surfaces face towards the engine in the direction of Fₒ because the engine is the sound source.

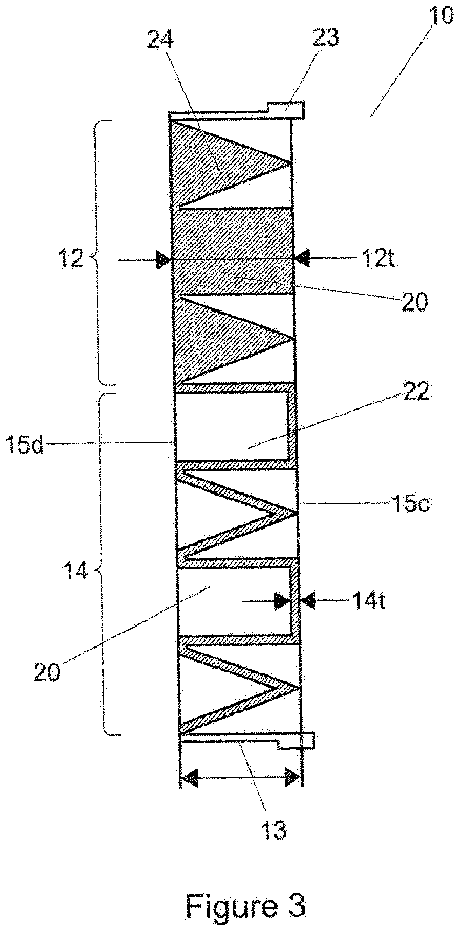

In the example shown the Figure 2, each surface formation 20 comprises a pair of intersecting tapering surfaces 24 bordered by a pair of relatively smaller parallel surfaces 22 aligned substantially parallel with the flow axis Fᵢ and Fₒ. It will be appreciated by one skilled in the art, however, that these surface formations 20 may take a variety of different forms. Any shape suitable for use as an acoustic absorber can be used. For example, suitable forms may be provided by a plurality of raised pillars or fingers of varying lengths, pyramids, domes or any other suitable shape arranged to increase the surface area of the filter element 15 whilst minimising the area of surfaces that may otherwise give rise to acoustic reflections. The surface formations 20 as seen in Figure 2 may appear to be substantially uniform between the first and second regions 12, 14. However, by varying the thickness of the material forming each formation 20, the balance between resistance to air throughput and noise attenuation may be tuned as desired for any location within the bordering edge 13 of the filer element 10. The construction of each surface formation 20 is shown in greater detail in Figure 3.

Figure 3 shows a cross-section view along A-A of the filter element shown in Figure 2.

The edge 13 borders the filter element 10 and is provided with suitable mounting features 23 arranged for engagement with corresponding formations formed in the inner surface of the air box 3 (not shown). The wall 15 of the filter element 10 supported by the edge 13 is formed from a unitary body of air permeable material of varying thickness. The thickness of the surface formations 20 varies across the width of the wall 15 and is shown the Figure 3 as being thicker in the first region 12 where it is optimised for noise reduction, and relatively thinner where it is optimised for air flow and air filtration.

The difference in material density in the two regions is dictated by the difference in thickness of the material used in the two regions. The overall density of material in region 12 is shown here to be greater than the density of material in region 14.

The difference in material thickness between the first and second region 12, 14 is represented by arrows 12t, 14t respectively. Where the material is thicker, that is there is greater density of material, then noise caused by the flow of air into the air intake system will be attenuated. In particular, the volume of high frequency noise is attenuated. Similarly, the surface features 20, which may be provided on one or both surfaces 15d, 15c of the filter element 10, address, at least in part, the problem of sound wave reflection within the air intake system which would otherwise tend to increase the noise levels produced in use.

As the material used to form the wall 15 is air permeable, both the first region 12, which is optimised for noise reduction, and the thinner second region 14, will filter the air. This approach ensures maximum surface area is available and optimises available throughput of air. Additionally, this approach permits the user to optimise the location of an integrally formed noise attenuating feature provided by the first region integrated into a unitary filter element 10.

The configuration of the two different regions 12, 14 can be different from that shown. For example, the two regions are not limited to equal rectilinear portions of the air filter. The size, shape and position of one region relative to another can be varied, for example to fit different sizes and shapes of sir filters. Adjusting the relative size shape and positions of the two regions relative to each other can also be used to tune the noise attenuation an/or air filtration parameters of the air filter element. For example to tune out different frequencies of noise, or to allow for increased air flow rate.

The filter element of the present invention serves the dual function of a sound absorption device within an air intake system and a filtration device arranged to filter dust and other airborne particles out of the air flowing into the intake system. This approach improves overall air filter performance without increasing packaging space or parts complexity or assembly time.

The present invention allows for greater design freedom for the air intake and for the air box, providing a configurable performance feature that may be readily retrofitted into an existing air intake system. It is known that induction noise may be concentrated around a specific structural feature within the air intake system. The present invention provides the user with a solution that may be readily tuned to address specific areas of concern. By adjusting the density and thickness of the air permeable material forming the filter element, the noise attenuating first region may be arranged to be offset within the filter element, or alternatively may be arranged so as to be entirely surrounded by the air filtering second region, or vice versa.

Other advantages will be apparent to one skilled in the art and the present examples and embodiments are to be considered illustrative and not restrictive. The invention is not to be limited to the details given herein, but may be modified within the scope and equivalence of the appended claims.

## Claims

1. An air filter element (2) for a vehicle with a noise reduction feature comprising first and second contiguous air-permeable regions (12, 14) wherein the first region (12) has a thickness and/or density different from that of the second air-permeable region (14), **characterised in that**:
the thickness and/or density of the first air-permeable region (12) is selected to improve or optimise noise absorption within the air filter system and the thickness and/or density of the second air-permeable region (14) is selected to improve or optimise filtration of particles within the air flowing through the air filter system;
wherein the second air-permeable region (14) is arranged to permit a greater through-flow of air than the first air-permeable region (12) and the density and/or thickness of the first air-permeable region is greater than that of the second air-permeable region, and
wherein the element has an upstream surface and a downstream surface, wherein at least one of the upstream surface (15d) and/or downstream surface (15c) bounding the first region is provided with surface formations (20) arranged to reduce or substantially eliminate reflection of sound waves from said upstream and/or downstream surfaces of the first region, and the surface formations are in use, directed towards the induction system side of a vehicle engine.

2. An air filter element as claimed in claim 1 wherein at least one of the upstream and/or downstream surfaces (20) of the first region (12) is arranged so as not to be perpendicular with the flow axis of the air passing through the filter element.

3. An air filter element as claimed in claim 2 wherein the surface formations (20) take the form of a plurality of raised triangular section elements alternately orientated at right angles to each other to reduce the surface area of any pair of parallel surfaces formed thereby.

4. An air filter element (2) as claimed in preceding claim, wherein the first and second air-permeable regions (12, 14) are integrally or unitarily formed from an air-permeable material.

5. An air filter element (2) as claimed in claim 4, wherein the air-permeable material is polyethylene terephthalate (polyester or PET).

6. An air intake system (1) for a machine, the intake system comprising an air filter element (2) as claimed in any preceding claim mounted in an air filter housing, an intake duct (6) arranged to guide air towards the filter element, and an air outlet (7) arranged in use to guide the filtered air towards said machine.

7. An internal combustion engine comprising an air filter element (2) as claimed in any preceding claims.

8. A method of manufacturing the air filter element (2) of claim 1 with a noise reduction feature comprising first and second contiguous air-permeable regions (12, 14) wherein the first and second regions are formed by co-moulding or otherwise introducing together two materials of dissimilar densities or other physical properties into the same tool to form the unitary air filter element.

## Patentansprüche

1. Luftfilterelement (2) für ein Fahrzeug mit einem Geräuschminderungsmerkmal, umfassend einen ersten und einen zweiten zusammenhängenden luftdurchlässigen Bereich (12, 14), wobei der erste Bereich (12) eine Dicke und/oder eine Dichte aufweist, die von der des zweiten luftdurchlässigen Bereichs (14) verschieden ist, **dadurch gekennzeichnet, dass**:
die Dicke und/oder die Dichte des ersten luftdurchlässigen Bereichs (12) ausgewählt ist, um Geräuschabsorption in dem Luftfiltersystem zu verbessern oder zu optimieren, und die Dicke und/oder die Dichte des zweiten luftdurchlässigen Bereichs (14) ausgewählt ist, um die Filtration von Partikeln in der Luft, die durch das Luftfiltersystem strömt, zu verbessern oder zu optimieren;
wobei der zweite luftdurchlässige Bereich (14) angeordnet ist, um eine größere Durchströmung von Luft zu ermöglichen als der erste luftdurchlässige Bereich (12), und die Dichte und/oder Dicke des ersten luftdurchlässigen Bereichs größer ist als die des zweiten luftdurchlässigen Bereichs, und
wobei das Element eine stromaufwärts liegende Oberfläche und eine stromabwärts liegende Oberfläche aufweist, wobei wenigstens eine der stromaufwärts liegenden Oberfläche (15d) und/oder der stromabwärts liegenden Oberfläche (15c), die den ersten Bereich begrenzen, mit Oberflächenausbildungen (20) versehen ist, die angeordnet sind, um eine Reflexion von Schallwellen von der stromaufwärts liegenden Oberfläche und/oder der stromabwärts liegenden Oberfläche des ersten Bereichs zu verringern oder im Wesentlichen zu eliminieren, und die Oberflächenausbildungen im Gebrauch zur Ansaugsystemseite eines Fahrzeugmotors hin gerichtet sind.

2. Luftfilterelement nach Anspruch 1, wobei wenigstens eine der stromaufwärts liegenden und/oder der stromabwärts liegenden Oberfläche (20) des ersten Bereichs (12) derart angeordnet ist, dass sie nicht senkrecht zur Strömungsachse der Luft ist, die durch das Filterelement passiert.

3. Luftfilterelement nach Anspruch 2, wobei die Oberflächenausbildungen (20) die Form mehrerer erhöhter dreieckiger Abschnittselemente annehmen, die abwechselnd in rechten Winkeln zueinander ausgerichtet sind, um die Oberfläche eines beliebigen Paars von parallelen Oberflächen, die dadurch ausgebildet werden, zu verringern.

4. Luftfilterelement (2) nach einem der vorhergehenden Ansprüche, wobei der erste und der zweite luftdurchlässige Bereich (12, 14) einstückig oder einheitlich aus einem luftdurchlässigen Material ausgebildet sind.

5. Luftfilterelement (2) nach Anspruch 4, wobei das luftdurchlässige Material Polyethylenterephthalat (Polyester oder PET) ist.

6. Luftansaugsystem (1) für eine Maschine, wobei das Ansaugsystem Folgendes umfasst: ein Luftfilterelement (2) nach einem der vorhergehenden Ansprüche, das in einem Luftfiltergehäuse befestigt ist, einen Ansaugkanal (6), der angeordnet ist, um Luft zum Filterelement hinzuleiten, und einen Luftaustritt (7), der angeordnet ist, im Gebrauch die gefilterte Luft zur Maschine hinzuleiten.

7. Verbrennungsmotor, umfassend ein Luftfilterelement (2) nach einem der vorhergehenden Ansprüche.

8. Verfahren zum Herstellen des Luftfilterelements (2) nach Anspruch 1 mit einem Geräuschminderungsmerkmal, umfassend einen ersten und einen zweiten zusammenhängenden luftdurchlässigen Bereich (12, 14), wobei der erste und der zweite Bereich durch gemeinsames Formen oder anderweitiges Zusammenführen von zwei Materialien mit verschiedenen Dichten oder anderen physikalischen Eigenschaften in dasselbe Werkzeug ausgebildet werden, um das einheitliche Luftfilterelement auszubilden.

## Revendications

1. Elément de filtre à air (2) pour un véhicule doté d'une particularité de réduction de bruit comprenant des première et seconde régions perméables à l'air contiguës (12, 14) dans lequel la première région (12) a une épaisseur et/ou une densité différentes de celles de la seconde région perméable à l'air (14), **caractérisé en ce que** :
l'épaisseur et/ou la densité de la première région perméable à l'air (12) sont choisies pour améliorer ou optimiser l'absorption de bruit au sein du système de filtre à air et l'épaisseur et/ou la densité de la seconde région perméable à l'air (14) sont choisies pour améliorer ou optimiser la filtration de particules au sein de l'air s'écoulant à travers le système de filtre à air ;
dans lequel la seconde région perméable à l'air (14) est agencée pour permettre un écoulement traversant d'air plus important que la première région perméable à l'air (12) et la densité et/ou l'épaisseur de la première région perméable à l'air sont plus importantes que celles de la seconde région perméable à l'air, et
dans lequel l'élément a une surface amont et une surface aval, dans lequel au moins l'une de la surface amont (15d) et/ou de la surface aval (15c) délimitant la première région est pourvue de formations de surface (20) agencées pour réduire ou sensiblement éliminer la réflexion d'ondes sonores depuis lesdites surfaces amont et/ou aval de la première région, et les formations de surface sont, en utilisation, dirigées vers le côté de système d'induction d'un moteur de véhicule.

2. Elément de filtre à air selon la revendication 1, dans lequel au moins l'une des surfaces amont et/ou aval (20) de la première région (12) est agencée de façon à ne pas être perpendiculaire à l'axe d'écoulement de l'air traversant l'élément de filtre.

3. Elément de filtre à air selon la revendication 2, dans lequel les formations de surface (20) prennent la forme d'une pluralité d'éléments de section triangulaire surélevés orientés en alternance à angle droit les uns par rapport aux autres pour réduire la superficie de toute paire de surfaces parallèles formée ainsi.

4. Elément de filtre à air (2) selon l'une quelconque des revendications précédentes, dans lequel les première et seconde régions perméables à l'air (12, 14) sont formées d'un seul tenant ou de façon monobloc à partir d'un matériau perméable à l'air.

5. Elément de filtre à air (2) selon la revendication 4, dans lequel le matériau perméable à l'air est le polytéréphtalate d'éthylène (polyester ou PET).

6. Système d'admission d'air (1) pour une machine, le système d'admission comprenant un élément de filtre à air (2) tel que revendiqué dans l'une quelconque des revendications précédentes monté dans un logement de filtre à air, un conduit d'admission (6) agencé pour guider l'air vers l'élément de filtre, et un refoulement d'air (7) agencé en utilisation pour guider l'air filtré vers ladite machine.

7. Moteur à combustion interne comprenant un élément de filtre à air (2) selon l'une quelconque des revendications précédentes.

8. Procédé de fabrication de l'élément de filtre à air (2) de la revendication 1 doté d'une particularité de réduction de bruit comprenant des première et seconde régions perméables à l'air contiguës (12, 14), dans lequel les première et seconde régions sont formées par co-moulage ou sinon par introduction conjointe de deux matériaux de densités ou d'autres propriétés physiques dissemblables dans le même outil pour former l'élément de filtre à air monobloc.
